# EUROPEAN PATENT APPLICATION

(11) **EP 2 988 229 A1**
(43) Date of publication of application: **24.02.2016**
(21) Application number: 14876508.4
(22) Date of filing: 26.06.2014
(51) Int. Cl.: G06F 17/30

(54) **INFORMATION RETRIEVAL METHOD AND DEVICE**

(30) Priority: 31.12.2013 CN 201310754456
(71) Applicant: Huawei Technologies Co., Ltd., Longgang District Shenzhen, Guangdong 518129 (CN)
(72) Inventor: LU, Zhengdong, Shenzhen Guangdong 518129 (CN); LI, Hang, Shenzhen Guangdong 518129 (CN)
(74) Representative: Kreuz, Georg Maria
(86) International application number: PCT/CN2014/080874
(87) International publication number: WO 2015/100980

(57) **Abstract**

The present invention relates to the field of computer communications technologies and discloses an information retrieval method and apparatus. In this solution, even if result information does not include a retrieval keyword, a matching value between the result information and each local matching model can be determined in a local matching model set according to a retrieval keyword group and a result keyword group that is determined according to a result information group. Then, a relevance degree is obtained according to the matching value between the result information and all local matching models. Therefore, the result information that has relatively high relevance with the retrieval instruction but does not include the retrieval keyword can still be presented to a user, which improves retrieval accuracy.

## Description

### TECHNICAL FIELD

The present invention relates to the field of information retrieval technologies, and in particular, to an information retrieval method and apparatus.

### BACKGROUND

With development of computer communications technologies and internet technologies, information resources on the internet increase exponentially. Retrieving and acquiring related information by using the internet increasingly becomes an indispensable part of people's life and work. Anyone can post information anytime anywhere by using a network. Information required by a user is quickly and effectively found in a huge information base, which makes the engine helpful in information searching.

In an existing information retrieval method, after receiving a retrieval instruction, a terminal searches a stored retrieval database for an answer that includes a retrieval keyword in the retrieval instruction, sorts the retrieved answer according to the number of retrieval keywords included in the retrieved answer, and then presents the sorted answer. A specific process is as follows:
Step a: Determine a retrieval keyword in a received retrieval instruction.
Step b: Retrieve an answer that includes the retrieval keyword.
Step c: Sort the retrieved answer according to the number of retrieval keywords and present the sorted answer.

However, the following defect exists in the foregoing method: Some information does not include the retrieval keyword, but the information has a relatively high relevance with the retrieval instruction. However, because the information does not include the retrieval keyword, the information with relatively high relevance cannot be retrieved by using the existing information retrieval method. Therefore, a problem of relatively low accuracy of a retrieval result exists in the existing information retrieval method.

For example, a retrieval instruction is a question "what is a specialty in Beijing". In the existing information retrieval method, an answer that includes a keyword "Beijing" and/or a keyword "specialty" is retrieved. It is assumed that there are 10 answers, the 10 answers are sorted according to the number of the retrieval keyword "Beijing" and the retrieval keyword "specialty", and then the sorted answers are presented. However, in a piece of information, for example, "a lot, such as a tuckahoe pie, a roast duck ", though the information has relatively high relevance with the question "what is a specialty in Beijing", the information cannot be retrieved because it does not include the keyword "Beijing" and the keyword "specialty". As a result, retrieval accuracy is relatively low.

In conclusion, a problem of relatively low accuracy exists in the current information retrieval method.

### SUMMARY

Embodiments of the present invention provide an information retrieval method and apparatus to resolve a problem in an existing information retrieval process that retrieval accuracy is relatively low.

The embodiments of the present invention provide the following specific technical solutions:
According to a first aspect, an information retrieval method is provided and includes:
   determining a retrieval keyword group from a received retrieval instruction, and retrieving a result information group from a retrieval database according to the retrieval instruction; and
   for each piece of result information in the retrieved result information group, separately performing the following steps:
      determining, according to the retrieval keyword group and a result keyword group, a matching value between the result information and each local matching model in a local matching model set, where the result keyword group is determined according to the result information group;
      calculating, according to the matching value between the result information and each local matching model, a relevance degree that is used to represent relevance between the result information and the retrieval instruction; and
      sorting each piece of result information in the result information group according to the relevance degree corresponding to each piece of result information, and presenting each piece of sorted result information.

With reference to the first aspect, in a first possible implementation manner, before the retrieving a result information group from a retrieval database according to the retrieval instruction, the method further includes:
acquiring document data; and
constructing the retrieval database according to the document data.

With reference to the first aspect or the first possible implementation manner of the first aspect, in a second possible implementation manner, the retrieving a result information group from a retrieval database according to the retrieval instruction specifically includes:
retrieving the result information group from the retrieval database according to the retrieval instruction by using locality-sensitive hashing LSH and a keyword matching manner; and/or
retrieving, in an inverted index manner and according to the retrieval keyword group determined from the retrieval instruction, the result information group from the retrieval database.
With reference to the first aspect or the first to the second possible implementation manners of the first aspect, in a third possible implementation manner, any local matching model in the local matching model set includes an information keyword group and a response keyword group; and
the determining, according to the retrieval keyword group and a result keyword group, a matching value between the result information and each local matching model in a local matching model set specifically includes:
   for each local matching model, separately performing the following steps:
   determining an information keyword matched between the retrieval keyword group and the information keyword group, and a response keyword matched between the result keyword group and the response keyword group;
   generating a two-dimensional keyword combination, where the two-dimensional keyword combination includes the matched information keyword and the matched response keyword;
   determining a weight value corresponding to the two-dimensional keyword combination; and
   calculating a matching value between the result keyword group and the local matching model according to the weight value.

With reference to the third possible implementation manner of the first aspect, in a fourth possible implementation manner, both the information keyword group and the response keyword group are determined based on acquired annotation data and according to a bilingual topic model; where
any two-dimensional description combination included in the annotation data is formed by an information description and a response description, and the response description in each two-dimensional description combination corresponds to a tag, and the tag is used to represent whether the corresponding response description matches the information description belonging to a same two-dimensional description combination.

With reference to the third or the fourth possible implementation manner of the first aspect, in a fifth possible implementation manner, the determining a weight value corresponding to the two-dimensional keyword combination specifically includes:
determining, according to the acquired annotation data, the weight value corresponding to the two-dimensional keyword combination.

With reference to the fifth possible implementation manner of the first aspect, in a sixth possible implementation manner, the determining, according to the acquired annotation data, the weight value corresponding to the two-dimensional keyword combination specifically includes:
determining, by using a backpropagation algorithm and according to the acquired annotation data, the weight value corresponding to the two-dimensional keyword combination.

With reference to the first aspect or the first to the sixth possible implementation manners of the first aspect, in a seventh possible implementation manner, the calculating, according to the matching value between the result information and each local matching model, a relevance degree that is used to represent relevance between the result information and the retrieval instruction specifically includes:
calculating, by using a deep neural network algorithm, according to the matching value between the result information and each local matching model, and based on a comprehensive matching model, the relevance degree that is used to represent the relevance between the result information and the retrieval instruction.

With reference to the seventh possible implementation manner of the first aspect, in an eighth possible implementation manner, the comprehensive matching model is determined according to the bilingual topic model.

With reference to the seventh to the eighth possible implementation manners of the first aspect, in a ninth possible implementation manner, the calculating, by using a deep neural network algorithm, according to the matching value between the result information and each local matching model, and based on a comprehensive matching model, the relevance degree that is used to represent the relevance between the result information and the retrieval instruction specifically includes:
determining, by using the deep neural network algorithm, according to the matching value between the result information and each local matching model, and based on the comprehensive matching model, a weight value of each matching value; and
calculating, according to each matching value and the weight value corresponding to each matching value, the relevance degree that is used to represent the relevance between the result information and the retrieval instruction.

With reference to the ninth possible implementation manner of the first aspect, in a tenth possible implementation manner, the weight value corresponding to each matching value is determined according to the acquired annotation data by using the backpropagation algorithm.

With reference to the first to the tenth possible implementation manners of the first aspect, in an eleventh possible implementation manner, the determining an information keyword matched between the retrieval keyword group and the information keyword group specifically includes:
determining an information keyword same as a retrieval keyword and an information keyword with a same meaning as a retrieval keyword; and
the determining a response keyword matched between the result keyword group and the response keyword group specifically includes:
   determining a response keyword same as a result keyword and an information keyword with a same meaning as a result keyword.

According to a second aspect, an information retrieval apparatus is provided and includes:
a retrieving unit, configured to determine a retrieval keyword group from a received retrieval instruction, and retrieve a result information group from a retrieval database according to the retrieval instruction;
a determining unit, configured to, for each piece of result information in the retrieved result information group, separately perform the following step: determine, according to the retrieval keyword group and a result keyword group, a matching value between the result information and each local matching model in a local matching model set, where the result keyword group is determined according to the result information group;
a calculating unit, configured to calculate, according to the matching value between the result information and each local matching model, a relevance degree that is used to represent relevance between the result information and the retrieval instruction; and
a presenting unit, configured to sort each piece of result information in the result information group according to the relevance degree corresponding to each piece of result information, and present each piece of sorted result information.

With reference to the first aspect, in a first possible implementation manner, the retrieving unit is further configured to acquire document data; and construct the retrieval database according to the document data.

With reference to the first aspect or the first possible implementation manner of the first aspect, in a second possible implementation manner, the retrieving unit is specifically configured to retrieve the result information group from the retrieval database according to the retrieval instruction by using locality-sensitive hashing LSH and a keyword matching manner; and/or
retrieve, in an inverted index manner and according to the retrieval keyword group determined from the retrieval instruction, the result information group from the retrieval database.

With reference to the first aspect or the first to the second possible implementation manners of the first aspect, in a third possible implementation manner, any local matching model that is in the local matching model set and for which the determining unit determines the matching value includes an information keyword group and a response keyword group; and
the determining unit is specifically configured to, for each local matching model, separately perform the following steps:
determine an information keyword matched between the retrieval keyword group and the information keyword group, and a response keyword matched between the result keyword group and the response keyword group;
generate a two-dimensional keyword combination, where the two-dimensional keyword combination includes the matched information keyword and the matched response keyword;
determine a weight value corresponding to the two-dimensional keyword combination; and
calculate a matching value between the result keyword group and the local matching model according to the weight value.

With reference to the third possible implementation manner of the first aspect, in a fourth possible implementation manner, both the information keyword group and the response keyword group are determined based on acquired annotation data and according to a bilingual topic model, where the information keyword group and the response keyword group are included in any local matching model that is in the local matching model set and for which the determining unit determines the matching value; where
any two-dimensional description combination included in the annotation data is formed by an information description and a response description, and the response description in each two-dimensional description combination corresponds to a tag, and the tag is used to represent whether the corresponding response description matches the information description belonging to a same two-dimensional description combination.

With reference to the third or the fourth possible implementation manner of the first aspect, in a fifth possible implementation manner, the determining unit is specifically configured to determine, according to the acquired annotation data, the weight value corresponding to the two-dimensional keyword combination.

With reference to the fifth possible implementation manner of the first aspect, in a sixth possible implementation manner, the determining unit is specifically configured to determine, by using a backpropagation algorithm and according to the acquired annotation data, the weight value corresponding to the two-dimensional keyword combination.

With reference to the first aspect or the first to the sixth possible implementation manners of the first aspect, in a seventh possible implementation manner, the calculating unit is specifically configured to calculate, by using a deep neural network algorithm, according to the matching value between the result information and each local matching model, and based on a comprehensive matching model, the relevance degree that is used to represent the relevance between the result information and the retrieval instruction.

With reference to the seventh possible implementation manner of the first aspect, in an eighth possible implementation manner, the comprehensive matching model, based on which the calculating unit calculates the relevance degree, is determined according to the bilingual topic model.

With reference to the seventh to the eighth possible implementation manners of the first aspect, in a ninth possible implementation manner, the calculating unit is specifically configured to determine, by using the deep neural network algorithm, according to the matching value between the result information and each local matching model, and based on the comprehensive matching model, a weight value of each matching value; and
calculate, according to each matching value and the weight value corresponding to each matching value, the relevance degree that is used to represent the relevance between the result information and the retrieval instruction.

With reference to the ninth possible implementation manner of the first aspect, in a tenth possible implementation manner, the weight value that is determined by the calculating unit and corresponds to each matching value is determined according to the acquired annotation data by using the backpropagation algorithm.

With reference to the first to the tenth possible implementation manners of the first aspect, in an eleventh possible implementation manner, the determining unit is specifically configured to determine an information keyword same as a retrieval keyword and an information keyword with a same meaning as a retrieval keyword; and
the determining unit is specifically configured to determine a response keyword same as a result keyword and an information keyword with a same meaning as a result keyword.

Beneficial effects of the present invention are as follows:
In the prior art, if information that has relatively high relevance with a retrieval instruction does not include a retrieval keyword, the information cannot be retrieved. Therefore, a problem that accuracy of a retrieval result is relatively low exists in an existing information retrieval method. However, in the embodiments of the present invention, a result information group is first retrieved from a retrieval result; for each piece of result information, a matching value between the result information and each local matching model in a local matching model set is determined; then, a relevance degree that is used to represent relevance between the result information and the retrieval instruction is calculated according to the matching value between the result information and each local matching model in the local matching model set; then, each piece of result information in the result information group is sorted according to the relevance degree corresponding to each result information, and each piece of sorted result information is presented. In this solution, even if the result information does not include the retrieval keyword, the matching value between the result information and each local matching model can be determined in the local matching model set according to a retrieval keyword group and a result keyword group, and then the relevance degree is obtained according to a matching value between the result information and all local matching models. Therefore, the result information that has relatively high relevance with the retrieval instruction but does not include the retrieval keyword can still be presented to a user, which improves retrieval accuracy.

### BRIEF DESCRIPTION OF DRAWINGS

FIG. 1 is a flowchart of an information retrieval method according to an embodiment of the present invention;
FIG. 2 is an embodiment of an information retrieval method according to an embodiment of the present invention; and
FIG. 3 is a schematic functional structural diagram of an information retrieval apparatus according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The term "and/or" in this specification is only an associative relationship for describing associated objects and represents that three relationships may exist. For example, A and/or B may represent that: A independently exists, both A and B simultaneously exist, and B independently exists. In addition, a character "/" in this specification generally indicates an "or" relationship between the associated objects.

In the embodiments of the present invention, an information retrieval method is provided, where the information retrieval method includes: determining a retrieval keyword group from a received retrieval instruction, and retrieving a result information group from a retrieval database according to the retrieval instruction; and for each piece of result information in the retrieved result information group, separately performing the following operations: determining, according to the retrieval keyword group and a result keyword group, a matching value between the result information and each local matching model in a local matching model set, where the result keyword group is determined according to the result information group; calculating, according to the matching value between the result information and each local matching model, a relevance degree that is used to represent relevance between the result information and the retrieval instruction; and sorting each piece of result information in the result information group according to the relevance degree corresponding to each piece of result information, and presenting each piece of sorted result information. In this solution, even if the result information does not include the retrieval keyword, the matching value between the result information and each local matching model can be determined in the local matching model set according to the retrieval keyword group and the result keyword group of the result information. Then the relevance degree is obtained according to a matching value between the result information and all local matching models. Therefore, the result information that has relatively high relevance with the retrieval instruction but does not include the retrieval keyword can still be presented to a user, which improves retrieval accuracy.

The following describes in detail exemplary implementation manners of the present invention with reference to the accompanying drawings.

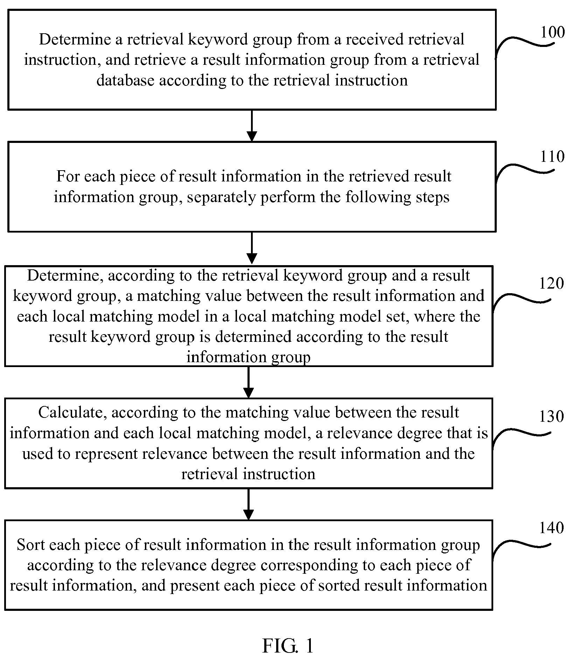

Referring to FIG. 1, an embodiment of the present invention provides an information retrieval method, and a process of the method embodiment is as follows:
Step 100: Determine a retrieval keyword group from a received retrieval instruction, and retrieve a result information group from a retrieval database according to the retrieval instruction.
Step 110: For each piece of result information in the retrieved result information group, separately perform the following steps:
Step 120: Determine, according to the retrieval keyword group and a result keyword group, a matching value between the result information and each local matching model in a local matching model set, where the result keyword group is determined according to the result information group.
Step 130: Calculate, according to the matching value between the result information and each local matching model, a relevance degree that is used to represent relevance between the result information and the retrieval instruction.
Step 140: Sort each piece of result information in the result information group according to the relevance degree corresponding to each piece of result information, and present each piece of sorted result information.

In this embodiment of the present invention, before the retrieving a result information group from a retrieval database according to the retrieval instruction, the method further includes the following operations:
acquiring document data; and constructing the retrieval database according to the document data.

For example, document data, such as first document data (what is a specialty in Beijing; a roast duck, a tuckahoe pie, a preserved fruit, and noodles with soybean paste are all delicious) and second document data (autumn in Beijing is the most beautiful; yes, maple leaves may be enjoyed in October), is acquired from a microblog, and then the retrieval database is constructed by using the document data.

Certainly, in an actual application, data is acquired in multiple manners, which is a relatively mature technology. Details are not described herein again.

In this embodiment of the present invention, the retrieval instruction may be a question, and may also be a statement. For example, the retrieval instruction may be such a question as "what is a specialty in Beijing". In this case, result information retrieved may be: "there are specialties such as a roast duck, a tuckahoe pie, and a preserved fruit, and Quanjude has the most delicious roast duck". The retrieval instruction may also be such a statement as "Don't wanna go to work today". In this case, the result information that is retrieved may be: "There are always five or six days in a week that one doesn't wanna go to work". That is, the method described in steps 100 to 140 is not only applicable to a question-answer scenario for retrieving an answer to a question, but also applicable to a non-question-answer scenario for retrieving a related reply to a non-question. Certainly, in an actual application, the method described in steps 100 to 140 may also be applicable to another scenario. Details are not described herein again.

In this embodiment of the present invention, the result information group is retrieved from the retrieval database according to the retrieval instruction in multiple manners. For example, the result information group may be retrieved from the retrieval database according to the retrieval instruction by using LSH (Locality Sensitive Hash, locality-sensitive hash) and a keyword matching manner; or the result information group may be retrieved from the retrieval database according to the retrieval keyword group that is determined from the retrieval instruction in an inverted index manner. When the result information group is retrieved from the retrieval database according to the retrieval keyword group, optionally, only one manner may be used. Certainly, the result information group may also be retrieved from the retrieval database according to the retrieval instruction by combining the foregoing several manners.

In an actual application, the result information group may also be retrieved from the retrieval database according to the retrieval instruction in other manners, and details are not described herein again. In this case, the result information group may be retrieved from the retrieval database according to the retrieval instruction by using these manners and one or more of the foregoing manners.

In this embodiment of the present invention, any local matching model includes an information keyword group and a response keyword group. For example, a local matching model is: ("Beijing", "specialty", "taste"; "preserved fruit", "tuckahoe pie", "roast duck", "rolling donkey"), then "Beijing", "specialty", and "taste" form the information keyword group, and "preserved fruit", "tuckahoe pie", "roast duck", and "rolling donkey" form the response keyword group.

In this embodiment of the present invention, the matching value between the result information and each local matching model in the local matching model set is determined according to the retrieval keyword group and the result keyword group in multiple manners, for example, in the following manner:
For each local matching model, separately perform the following steps:
   determine an information keyword matched between the retrieval keyword group and the information keyword group, and a response keyword matched between the result keyword group and the response keyword group;
   determination and composition that generate a two-dimensional keyword combination, where the two-dimensional keyword combination includes the matched information keyword and the matched response keyword;
   determine a weight value corresponding to the two-dimensional keyword combination; and
   calculate a matching value between the result keyword group and the local matching model according to the weight value.

For example, the retrieval instruction is "where to buy a specialty in Beijing", and after step 100 is performed, one piece of result information obtained is "a tuckahoe pie tastes sweet". Then, matching is performed between a combination (where to buy a specialty in Beijing; a tuckahoe pie tastes sweet) and a local matching model set. During specific matching, a retrieval keyword group ("Beijing", "where", "buy", "specialty") of "where to buy a specialty in Beijing" and a result keyword group ("tuckahoe pie", "tastes", "sweet") of "a tuckahoe pie tastes sweet" are firstly extracted. It is assumed that there are 1000 local matching models in the local matching model set.

A local matching model includes ("specialty", "price"; "roast duck", "tuckahoe pie", "Paomo", "sticky rice"). For the local matching model ("specialty", "price"; "roast duck", "tuckahoe pie", "Paomo", "sticky rice"), perform the following operations:
determine that an information keyword matched between the retrieval keyword group ("Beijing", "where", "buy", "specialty") and an information keyword group ("specialty", "price") is "specialty"; and determine that a response keyword matched between the result keyword group ("tuckahoe pie", "tastes", "sweet") and a response keyword group ("roast duck", "tuckahoe pie", "Paomo", "sticky rice") is "tuckahoe pie"; and
then, use the determined matched information keyword, and the determined matched response keyword to form a two-dimensional keyword combination, and the two-dimensional keyword combination is ("specialty"; "tuckahoe pie"), determine a weight value corresponding to the two-dimensional keyword combination, and calculate a matching value between the result keyword group ("tuckahoe pie", "tastes", "sweet") and the local matching model ("specialty", "price"; "roast duck", "tuckahoe pie", "Paomo", "sticky rice") according to the weight value.

A local matching model includes ("Beijing", "travel"; "Quanjude", "Tiananmen", "The Great Wall"). For the local matching model ("Beijing", "travel"; "Quanjude", "Tiananmen"), perform the following operations:
determine that an information keyword matched between the retrieval keyword group ("Beijing", "where", "buy", and "specialty") and an information keyword group ("Beijing", "travel") is "Beijing"; and
determine that there is no response keyword matched between the result keyword group ("tuckahoe pie", "tastes", and "sweet") and a response keyword group ("Quanjude", "Tiananmen").

Because there is no matched response keyword in the response keyword group ("Quanjude", "Tiananmen"), it may be determined that a matching value between the result keyword group ("tuckahoe pie", "tastes", "sweet") and the local matching model ("Beijing", "travel"; "Quanjude", "Tiananmen", "The Great Wall") is 0.

This embodiment merely describes a case in which there is only one matched information keyword and one determined matched response keyword. In an actual application, a case in which there is probably more than one matched information keyword and more than one determined matched response keyword exists. A process of this case is similar to the foregoing process, and details are not described herein again.

The foregoing merely describes an example of a local matching model. For any local matching model among the 1000 local matching models in the local matching model set, a process is similar to the foregoing process, and details are not described herein again.

In this embodiment of the present invention, before the matching value between the result information and each local matching model in the local matching model set is determined according to the retrieval keyword group and the result keyword group of the result information, an architecture (architecture) of the local matching model set needs to be obtained. That is, the information keyword group and the response keyword group that are included in the local matching model set need to be obtained. The information keyword group or the response keyword group or both are obtained in multiple manners, for example, in the following manner:

Determine the information keyword group and the response keyword group, which are in the local matching model set, based on acquired annotation data and according to a bilingual topic model (bilingual topic modeling). That is, both the information keyword group and the response keyword group are determined based on the acquired annotation data and according to the bilingual topic model. Any two-dimensional description combination included in the annotation data is formed by an information description and a response description, and the response description in each two-dimensional description combination corresponds to a tag, and the tag is used to represent whether the corresponding response description matches the information description belonging to a same two-dimensional description combination.

For example, a combination (question; answer) is acquired from "BaiduZhidao", or a combination (microblog; reply) is acquired from "Microblog". In this case, these acquired combinations are not directly used as local matching models in the local matching model set. Instead, the information keyword group and the response keyword group are determined based on the acquired annotation data and according to the bilingual topic model.

For another example, a user A asks a question "what is a specialty in Beijing" on "BaiduZhidao", and there are two answers replied by other users. For example, Answer 1: "both tuckahoe pie and roast duck are not bad"; Answer 2: "Quanjude's roast duck is both expensive and terrible". The user A considers that Answer 1 "both tuckahoe pie and roast duck are not bad" is helpful to the user A. In this case, a combination (what is a specialty in Beijing; both tuckahoe pie and roast duck are not bad) is used as a local matching model in the local matching model set.

The foregoing merely describes how to obtain the architecture of the local matching model set, that is, an embodiment of obtaining the information keyword group and the response keyword group that are included in the local matching model set. Certainly, in an actual application, a manner of obtaining the local matching model set, that is, obtaining the information keyword group and the response keyword group that are included in the local matching model set, is not limited to the foregoing manners. Another manner may be used, and details are described herein again.

In this embodiment of the present invention, before the weight value corresponding to the two-dimensional keyword combination that is formed by the matched information keyword and the matched response keyword is determined, the method further includes the following operation:

Determining, according to the acquired annotation data, the weight value corresponding to the two-dimensional keyword combination in multiple manners, for example, determining the weight value corresponding to the two-dimensional keyword combination according to the acquired annotation data.

In this embodiment of the present invention, the weight value of any two-dimensional keyword combination, which is formed by the information keyword of the information keyword group and the response keyword of the response keyword group, is determined according to the acquired annotation data in multiple manners, where the information keyword group and the response keyword group are in any local matching model. That is, learning (learning) of the weight value of the two-dimensional combination in the architecture of the local matching model set is performed in multiple manners.

For example, the weight value corresponding to the two-dimensional keyword combination is determined according to the acquired annotation data by using a backpropagation algorithm (Back-Propagation) according to the acquired annotation data.

For example, a lot of annotation data about "journey" is acquired by using "BaiduZhidao". Then in responses corresponding to "journey", many responses are adopted by the user, and a large part of the adopted responses include a keyword "distance", and only a small part includes a keyword "location". In this case, by using the backpropagation algorithm according to the annotation data, it may be learned that a weight value of a two-dimensional keyword combination ("journey"; "distance") is greater than a weight value of a two-dimensional keyword combination ("journey"; "location").

The foregoing is merely one manner of determining, according to the acquired annotation data, the weight value corresponding to the two-dimensional keyword combination. In an actual application, another manner may be used, and details are not described herein again.

In this embodiment of the present invention, when the relevance degree that is used to represent the relevance between the result information and the retrieval instruction is calculated, the relevance degree that is used to represent the relevance between the result information and the retrieval instruction may be calculated according to the matching value between the result information and each local matching model.

For example, there are 1000 local matching models in a local matching model set, and 1000 matching values are obtained. When a relevance degree is calculated according to the 1000 matching values, first comprehensive processing may be performed first on the 1000 matching values based on a comprehensive matching model set to obtain 200 first comprehensive values; then, second comprehensive processing is performed on the 200 first comprehensive values based on the comprehensive matching model set to obtain 100 second comprehensive values; finally, third comprehensive processing is performed on the 100 second comprehensive values based on the comprehensive matching model set to obtain the relevance degree.

In this embodiment of the present invention, the relevance degree that is used to represent the relevance between the result information and the retrieval instruction is calculated according to the matching value between the result information and each local matching model in multiple manners, for example, in the following manner:
Calculate, by using a deep neural network algorithm (deep neural network), according to the matching value between the result information and each local matching model, and based on the comprehensive matching model set, the relevance degree that is used to represent the relevance between the result information and the retrieval instruction.

The foregoing merely provides an embodiment of calculating, according to the matching value between the result information and each local matching model, the relevance degree that is used to represent the relevance between the result information and the retrieval instruction. In an actual application, multiple other implementation manners may exist, and details are not described herein again.

In this embodiment of the present invention, the comprehensive matching model set is determined according to the bilingual topic model.

In this embodiment of the present invention, when the comprehensive matching model set is determined according to the bilingual topic model, multiple bilingual topic models may be used for implementation. However, precision of each bilingual topic model is different. For example, the comprehensive matching model set has a total of three layers, namely, a comprehensive layer 1, a comprehensive layer 2, and a comprehensive layer 3, and precision of a first bilingual topic model is lower than precision of a second bilingual topic model and the precision of the second bilingual topic model is lower than precision of a third bilingual topic model. In an application, the third bilingual topic model is used to construct the comprehensive layer 1, the second bilingual topic model is used to construct the comprehensive layer 2, and the first bilingual topic model is used to construct the comprehensive layer 3.

In this embodiment of the present invention, the relevance degree that is used to represent the relevance between the result information and the retrieval instruction is calculated in multiple manners by using the deep neural network algorithm, according to the matching value between the result information and each local matching model, and based on the comprehensive matching model. For example:

Determine the weight value of each matching value by using the deep neural network algorithm, according to the matching value between the result information and each local matching model, and based on the comprehensive matching model; and
calculate, according to each matching value and the weight value corresponding to each matching value, the relevance degree that is used to represent the relevance between the result information and the retrieval instruction.

The foregoing is merely an embodiment. In an actual application, there are multiple other embodiments, and details are not described herein again.

In this embodiment of the present invention, the weight value corresponding to each matching value is determined in multiple manners, for example, the weight value corresponding to each matching value may be determined according to the acquired annotation data by using the backpropagation algorithm.

The foregoing is merely a specific example of determining the weight value. Certainly, in an actual application, there may also be another determining manner, and details are not described herein again.

In this embodiment of the present invention, an information keyword matched between the retrieval keyword group and the information keyword group is determined in multiple manners, for example, an information keyword same as a retrieval keyword and an information keyword with a same meaning as a retrieval keyword are determined. For example, the information keyword is "price" and the retrieval keyword also is "price", then the information keyword is an information keyword same as a retrieval keyword. For example, the information keyword is "price" and the retrieval keyword also is "cost", then the information keyword is an information keyword with a same meaning as the retrieval keyword.

Similarly, a response keyword matched between the result keyword group and the response keyword group is determined in multiple manners, for example, a response keyword that is the same as the result keyword and an information keyword whose meaning is the same as that of a result keyword are determined.

To improve the retrieval efficiency, in this embodiment of the present invention, the local matching model set and the comprehensive matching model set are either keyword sets about questions and answers or keyword sets about information responses, for example: a microblog reply.

In this embodiment of the present invention, a process of determining, based on the acquired annotation data and according to the bilingual topic model, the information keyword group and the response keyword group that are in the local matching model set is a process of learning the architecture of the local matching model set.

Similarly, a process of determining the comprehensive matching model set according to the bilingual topic model is a process of learning the architecture of the comprehensive matching model set.

In this embodiment of the present invention, a process of determining, according to the acquired annotation data and by using the backpropagation algorithm, the weight value of any two-dimensional keyword combination that is formed by the information keyword of the information keyword group and the response keyword of the response keyword group is a process of learning a related weight parameter (parameters) of the local matching model set, where the information keyword group and the response keyword group are in any local matching model.

Similarly, a process of determining, by using the backpropagation algorithm and according to the acquired annotation data, the weight value corresponding to each weight value is a process of learning a related weight parameter of the comprehensive matching model set.

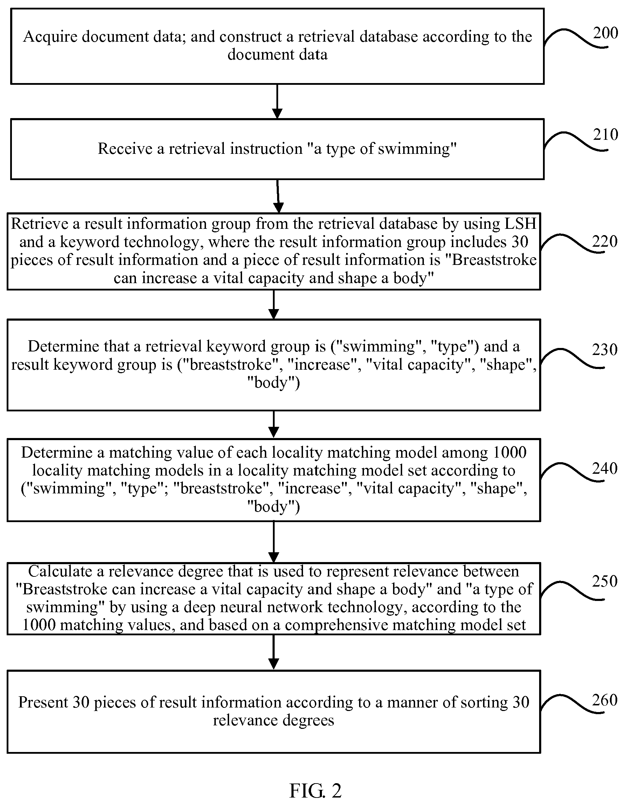

To better understand this embodiment of the present invention, the following provides a specific application scenario. A process of information retrieval is further described in detail, specifically, as shown in FIG. 2:
Step 200: Acquire document data; and construct a retrieval database according to the document data.
Step 210: Receive a retrieval instruction "a type of swimming".
Step 220: Retrieve a result information group from the retrieval database by using LSH and a keyword technology, where the result information group includes 30 pieces of result information and a piece of result information is "Breaststroke can increase a vital capacity and shape a body".
Step 230: Determine that a retrieval keyword group is ("swimming", "type") and a result keyword group is ("breaststroke", "increase", "vital capacity", "shape", "body).
Step 240: Determine a matching value of each local matching model among 1000 local matching models in a local matching model set according to ("swimming", "type"; "breaststroke", "increase", "vital capacity", "shape", "body").
Step 250: Calculate a relevance degree that is used to represent relevance between "Breaststroke can increase a vital capacity and shape a body" and "a type of swimming" by using a deep neural network technology, according to the 1000 matching values, and based on a comprehensive matching model set.
Step 260: Present 30 pieces of result information according to a manner of sorting 30 relevance degrees.

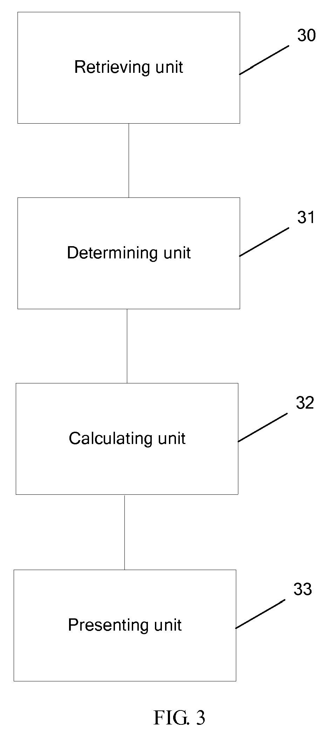

Based on the foregoing technical solution, referring to FIG. 3, an embodiment of the present invention provides an information retrieval apparatus, and the information retrieval apparatus includes a retrieving unit 30, a determining unit 31, a calculating unit 32, and a presenting unit 33.

The retrieving unit 30 is configured to determine a retrieval keyword group from a received retrieval instruction, and retrieve a result information group from a retrieval database according to the retrieval instruction.

The determining unit 31 is configured to, for each piece of result information in the retrieved result information group, separately perform the following step: determine, according to the retrieval keyword group and a result keyword group, a matching value between the result information and each local matching model in a local matching model set, where the result keyword group is determined according to the result information group.

The calculating unit 32 is configured to calculate, according to the matching value between the result information and each local matching model, a relevance degree that is used to represent relevance between the result information and the retrieval instruction.

The presenting unit 33 is configured to sort each piece of result information in the result information group according to the relevance degree corresponding to each piece of result information, and present each piece of sorted result information.

Further, in this embodiment of the present invention, the retrieving unit 30 is further configured to acquire document data; and construct the retrieval database according to the document data.

In this embodiment of the present invention, optionally, the retrieving unit 30 is specifically configured to retrieve the result information group from the retrieval database according to the retrieval instruction by using locality-sensitive hashing LSH and a keyword matching manner; and/or
retrieve, in an inverted index manner and according to the retrieval keyword group determined from the retrieval instruction, the result information group from the retrieval database.

In this embodiment of the present invention, optionally, any local matching model that is in the local matching model set and for which the determining unit 31 determines the matching value includes an information keyword group and a response keyword group.

The determining unit 31 is specifically configured to, for each local matching model, separately perform the following steps:
determine an information keyword matched between the retrieval keyword group and the information keyword group, and a response keyword matched between the result keyword group and the response keyword group;
generate a two-dimensional keyword combination, where the two-dimensional keyword combination includes the matched information keyword and the matched response keyword;
determine a weight value corresponding to the two-dimensional keyword combination; and
calculate a matching value between the result keyword group and the local matching model according to the weight value.

In this embodiment of the present invention, optionally, both the information keyword group and the response keyword group are determined based on acquired annotation data and according to a bilingual topic model, where the information keyword group and the response keyword group are included in any local matching model that is in the local matching model set and for which the determining unit 31 determines the matching value; where
any two-dimensional description combination included in the annotation data is formed by an information description and a response description, and the response description in each two-dimensional description combination corresponds to a tag, and the tag is used to represent whether the corresponding response description matches the information description belonging to a same two-dimensional description combination.

In this embodiment of the present invention, optionally, the determining unit 31 is specifically configured to determine, according to the acquired annotation data, the weight value corresponding to the two-dimensional keyword combination.

In this embodiment of the present invention, optionally, the determining unit 31 is specifically configured to determine, by using a backpropagation algorithm and according to the acquired annotation data, the weight value corresponding to the two-dimensional keyword combination.

In this embodiment of the present invention, optionally, the calculating unit 32 is specifically configured to calculate, by using a deep neural network algorithm, according to the matching value between the result information and each local matching model, and based on a comprehensive matching model, the relevance degree that is used to represent the relevance between the result information and the retrieval instruction.

In this embodiment of the present invention, optionally, the comprehensive matching model, based on which the calculating unit 32 calculates the relevance degree, is determined according to the bilingual topic model.

In this embodiment of the present invention, optionally, the calculating unit 32 is specifically configured to determine, by using the deep neural network algorithm, according to the matching value between the result information and each local matching model, and based on the comprehensive matching model, a weight value of each matching value; and;
calculate, according to each matching value and the weight value corresponding to each matching value, the relevance degree that is used to represent the relevance between the result information and the retrieval instruction.

In this embodiment of the present invention, optionally, the weight value that is determined by the calculating unit 32 and corresponds to each matching value is determined according to the acquired annotation data by using the backpropagation algorithm.

In this embodiment of the present invention, optionally, the determining unit 31 is specifically configured to determine an information keyword same as a retrieval keyword and an information keyword with a same meaning as a retrieval keyword.

The determining unit 31 is specifically configured to determine a response keyword same as a result keyword and an information keyword with a same meaning as a result keyword.

In conclusion, in the embodiments of the present invention, an information retrieval method is provided and the information retrieval method includes: determining a retrieval keyword group from a received retrieval instruction, and retrieving a result information group from a retrieval database according to the retrieval instruction; and for each piece of result information in the retrieved result information group, separately performing the following operations: determining, according to the retrieval keyword group and a result keyword group, a matching value between the result information and each local matching model in a local matching model set, where the result keyword group is determined according to the result information group; calculating, according to the matching value between the result information and each local matching model, a relevance degree that is used to represent relevance between the result information and the retrieval instruction; and sorting each piece of result information in the result information group according to the relevance degree corresponding to each piece of result information, and presenting each piece of sorted result information. In this solution, even if the result information does not include the retrieval keyword, the matching value between the result information and each local matching model can be determined in the local matching model set according to the retrieval keyword group and the result keyword group of the result information. Then the relevance degree is obtained according to a matching value between the result information and all local matching models. Therefore, the result information that has relatively high relevance with the retrieval instruction but does not include the retrieval keyword can still be presented to a user, which improves retrieval accuracy.

The present invention is described with reference to a flowchart and/or a block diagram of a method, a device (system), and a computer program product according to the embodiments of the present invention. It should be understood that, computer program instructions may implement each procedure and/or block in the flowchart and/or the block diagram, or a combination of procedures and/or blocks in the flowchart and/or the block diagram. The computer program instructions may be provided for a universal computer, a dedicated computer, an embedded processor, or a processor of another programmable data processing device to generate a machine, so that the instructions executed by the computer or the processor of another programmable data processing device generate an apparatus that is used to implement functions specified in one or more procedures in a flowchart and/or one or more blocks in a block diagram.

The computer program instructions may also be stored in a computer-readable memory capable of impelling the computer or another programmable data processing device to work in a specific manner, so that the instructions stored in the computer-readable memory generate a manufactured product that includes an instruction apparatus, where the instruction apparatus implements the functions specified in one or more procedures in a flowchart and/or one or more blocks in a block diagram.

The computer program instructions may also be loaded onto the computer or another programmable data processing device, so that a series of operation steps are implemented on the computer or another programmable device to generate processing implemented by the computer, and the instructions implemented on the computer or another programmable device provide steps for implementing the functions specified in one or more procedures in a flowchart and/or one or more blocks in a block diagram.

Although the foregoing embodiments of the present invention have been described, a person skilled in the art can make other changes and modifications to the embodiments once they learn basic creative concepts. Therefore, the claims attached hereto shall be construed as including the foregoing embodiments and all changes and modifications that fall within the scope of the present invention.

Apparently, a person skilled in the art may make modifications and variations to the embodiments of the present invention without departing from the spirit and scope of the embodiments of the present invention. Therefore, the invention is intended to include the modifications and variations provided that the modifications and variations to the embodiments of the present invention fall within the scope of protection defined by the claims of the present invention and their equivalents.

## Claims

1. An information retrieval method, **characterized by** comprising:
determining a retrieval keyword group from a received retrieval instruction, and retrieving a result information group from a retrieval database according to the retrieval instruction; and
for each piece of result information in the retrieved result information group, separately performing the following steps:
determining, according to the retrieval keyword group and a result keyword group, a matching value between the result information and each local matching model in a local matching model set, wherein the result keyword group is determined according to the result information group;
calculating, according to the matching value between the result information and each local matching model, a relevance degree that is used to represent relevance between the result information and the retrieval instruction; and
sorting, according to the relevance degree corresponding to each piece of result information, each piece of result information in the result information group, and presenting each piece of sorted result information.

2. The method according to claim 1, before the retrieving a result information group from a retrieval database according to the retrieval instruction, further comprising:
acquiring document data; and
constructing the retrieval database according to the document data.

3. The method according to claim 1 or 2, wherein the retrieving a result information group from a retrieval database according to the retrieval instruction specifically comprises:
retrieving the result information group from the retrieval database according to the retrieval instruction by using locality-sensitive hashing LSH and a keyword matching manner; and/or
retrieving, in an inverted index manner and according to the retrieval keyword group determined from the retrieval instruction, the result information group from the retrieval database.

4. The method according to any one of claims 1 to 3, wherein any local matching model in the local matching model set comprises an information keyword group and a response keyword group; and
the determining, according to the retrieval keyword group and a result keyword group, a matching value between the result information and each local matching model in a local matching model set specifically comprises:
for each local matching model, separately performing the following steps:
determining an information keyword matched between the retrieval keyword group and the information keyword group, and a response keyword matched between the result keyword group and the response keyword group;
generating a two-dimensional keyword combination, wherein the two-dimensional keyword combination comprises the matched information keyword and the matched response keyword;
determining a weight value corresponding to the two-dimensional keyword combination; and
calculating a matching value between the result keyword group and the local matching model according to the weight value.

5. The method according to claim 4, wherein both the information keyword group and the response keyword group are determined based on acquired annotation data and according to a bilingual topic model; wherein
any two-dimensional description combination comprised in the annotation data is formed by an information description and a response description, and the response description in each two-dimensional description combination corresponds to a tag, and the tag is used to represent whether the corresponding response description matches the information description belonging to a same two-dimensional description combination.

6. The method according to claim 4 or 5, wherein the determining a weight value corresponding to the two-dimensional keyword combination specifically comprises:
determining, according to the acquired annotation data, the weight value corresponding to the two-dimensional keyword combination.

7. The method according to claim 6, wherein the determining, according to the acquired annotation data, the weight value corresponding to the two-dimensional keyword combination specifically comprises:
determining, by using a backpropagation algorithm and according to the acquired annotation data, the weight value corresponding to the two-dimensional keyword combination.

8. The method according to any one of claims 1 to 7, wherein the calculating, according to the matching value between the result information and each local matching model, a relevance degree that is used to represent relevance between the result information and the retrieval instruction specifically comprises:
calculating, by using a deep neural network algorithm, according to the matching value between the result information and each local matching model, and based on a comprehensive matching model, the relevance degree that is used to represent the relevance between the result information and the retrieval instruction.

9. The method according to claim 8, wherein the comprehensive matching model is determined according to the bilingual topic model.

10. The method according to claim 8 or 9, wherein the calculating, by using a deep neural network algorithm, according to the matching value between the result information and each local matching model, and based on a comprehensive matching model, the relevance degree that is used to represent the relevance between the result information and the retrieval instruction specifically comprises:
determining, by using the deep neural network algorithm, according to the matching value between the result information and each local matching model, and based on the comprehensive matching model, a weight value of each matching value; and
calculating, according to each matching value and the weight value corresponding to each matching value, the relevance degree that is used to represent the relevance between the result information and the retrieval instruction.

11. The method according to claim 10, wherein the weight value corresponding to each matching value is determined according to the acquired annotation data by using the backpropagation algorithm.

12. The method according to any one of claims 4 to 11, wherein the determining an information keyword matched between the retrieval keyword group and the information keyword group specifically comprises:
determining an information keyword same as a retrieval keyword and an information keyword with a same meaning as a retrieval keyword; and
the determining a response keyword matched between the result keyword group and the response keyword group specifically comprises:
determining a response keyword same as a result keyword and an information keyword with a same meaning as a result keyword.

13. An information retrieval apparatus, **characterized by** comprising:
a retrieving unit, configured to determine a retrieval keyword group from a received retrieval instruction, and retrieve a result information group from a retrieval database according to the retrieval instruction;
a determining unit, configured to, for each piece of result information in the retrieved result information group, separately perform the following step: determine, according to the retrieval keyword group and a result keyword group, a matching value between the result information and each local matching model in a local matching model set, wherein the result keyword group is determined according to the result information group;
a calculating unit, configured to calculate, according to the matching value between the result information and each local matching model, a relevance degree that is used to represent relevance between the result information and the retrieval instruction; and
a presenting unit, configured to sort each piece of result information in the result information group according to the relevance degree corresponding to each piece of result information, and present each piece of sorted result information.

14. The apparatus according to claim 13, wherein the retrieving unit is further configured to acquire document data; and construct the retrieval database according to the document data.

15. The apparatus according to claim 13 or 14, wherein the retrieving unit is specifically configured to retrieve the result information group from the retrieval database according to the retrieval instruction by using locality-sensitive hashing LSH and a keyword matching manner; and/or
retrieve, in an inverted index manner and according to the retrieval keyword group determined from the retrieval instruction, the result information group from the retrieval database.

16. The apparatus according to any one of claims 13 to 15, wherein any local matching model that is in the local matching model set and for which the determining unit determines the matching value comprises an information keyword group and a response keyword group; and
the determining unit is specifically configured to, for each local matching model, separately perform the following steps:
determine an information keyword matched between the retrieval keyword group and the information keyword group, and a response keyword matched between the result keyword group and the response keyword group;
generate a two-dimensional keyword combination, wherein the two-dimensional keyword combination comprises the matched information keyword and the matched response keyword;
determine a weight value corresponding to the two-dimensional keyword combination; and
calculate a matching value between the result keyword group and the local matching model according to the weight value.

17. The apparatus according to claim 16, wherein both the information keyword group and the response keyword group are determined based on acquired annotation data and according to a bilingual topic model, wherein the information keyword group and the response keyword group are comprised in any local matching model that is in the local matching model set and for which the determining unit determines the matching value;
wherein, any two-dimensional description combination comprised in the annotation data is formed by an information description and a response description, and the response description in each two-dimensional description combination corresponds to a tag, and the tag is used to represent whether the corresponding response description matches the information description belonging to a same two-dimensional description combination.

18. The apparatus according to claim 16 or 17, wherein the determining unit is specifically configured to determine, according to the acquired annotation data, the weight value corresponding to the two-dimensional keyword combination.

19. The apparatus according to claim 18, wherein the determining unit is specifically configured to determine, by using a backpropagation algorithm and according to the acquired annotation data, the weight value corresponding to the two-dimensional keyword combination.

20. The apparatus according to any one of claims 13 to 19, wherein the calculating unit is specifically configured to calculate, by using a deep neural network algorithm, according to the matching value between the result information and each local matching model, and based on a comprehensive matching model, the relevance degree that is used to represent the relevance between the result information and the retrieval instruction.

21. The apparatus according to claim 20, wherein the comprehensive matching model, based on which the calculating unit calculates the relevance degree, is determined according to the bilingual topic model.

22. The apparatus according to claim 20 or 21, wherein the calculating unit is specifically configured to determine, by using the deep neural network algorithm, according to the matching value between the result information and each local matching model, and based on the comprehensive matching model, a weight value of each matching value; and
calculate, according to each matching value and the weight value corresponding to each matching value, the relevance degree that is used to represent the relevance between the result information and the retrieval instruction.

23. The apparatus according to claim 22, wherein the weight value that is determined by the calculating unit and corresponds to each matching value is determined according to the acquired annotation data by using the backpropagation algorithm.

24. The apparatus according to any one of claims 16 to 23, wherein the determining unit is specifically configured to determine an information keyword same as a retrieval keyword and an information keyword with a same meaning as a retrieval keyword; and
the determining unit is specifically configured to determine a response keyword same as a result keyword and an information keyword with a same meaning as a result keyword.
